# EUROPEAN PATENT APPLICATION

(11) **EP 4 440 188 A1**
(43) Date of publication of application: **02.10.2024**
(21) Application number: 23210034.7
(22) Date of filing: 15.11.2023
(51) Int. Cl.: H04W 28/02, H04W 72/543, H04W 72/1263

(54) **APPARATUS, SYSTEM, AND METHOD OF COMMUNICATING AIRTIME INFORMATION CORRESPONDING TO A QUALITY OF SERVICE (QOS) FLOW**

(30) Priority: 29.03.2023 US 202318192422
(71) Applicant: INTEL Corporation, Santa Clara, CA 95054 (US)
(72) Inventor: CARIOU, Laurent, 29290 Milizac (FR); DAS, Dibakar, Hillsboro (US); AKHMETOV, Dmitry, Hillsboro (US)
(74) Representative: Viering, Jentschura & Partner mbB Patent- und Rechtsanwälte

(57) **Abstract**

For example, a wireless communication station (STA) may be configured to set a channel bandwidth (BW) field to indicate a channel BW. For example, the STA may be configured to set airtime information in an airtime field. For example, the airtime information may be configured to indicate a required time duration for the STA to communicate one or more frame exchanges of a Quality of Service (QoS) flow over the channel BW. For example, the STA may be configured to transmit a frame to an Access Point (AP). For example, the frame may be configured to include the channel BW field and the airtime field.

## Description

### TECHNICAL FIELD

Aspects described herein generally relate to communicating airtime information corresponding to a Quality of Service (QoS) flow.

### BACKGROUND

Devices in a wireless communication system may be configured to utilize communication within a Transmit Opportunity (TxOP). For example, a wireless communication station may obtain a TxOP, which may be used by the wireless communication station for communication with one or more other devices.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of an airtime request Information Element (IE) format, in accordance with some demonstrative aspects.
Fig. 5 is a schematic illustration of a control information field format, in accordance with some demonstrative aspects.
Fig. 6 is a schematic illustration of a control frame format, in accordance with some demonstrative aspects.
Fig. 7 is a schematic flow-chart illustration of a method of communicating airtime information corresponding to a Quality of Service (QoS) flow, in accordance with some demonstrative aspects.
Fig. 8 is a schematic flow-chart illustration of a method of communicating airtime information corresponding to a QoS flow, in accordance with some demonstrative aspects.
Fig. 9 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (LTE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (IEEE 802.11-2020, IEEE Standard for Information Technology-Telecommunications and Information Exchange between Systems Local and Metropolitan Area Networks Specific Requirements; Part 11: Wireless LAN Medium Access Control (MAC) and Physical Layer (PHY) Specifications, December, 2020*) ;* and/or IEEE 802.11be (IEEE P802.11be/D2.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), May 2022)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band.

Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

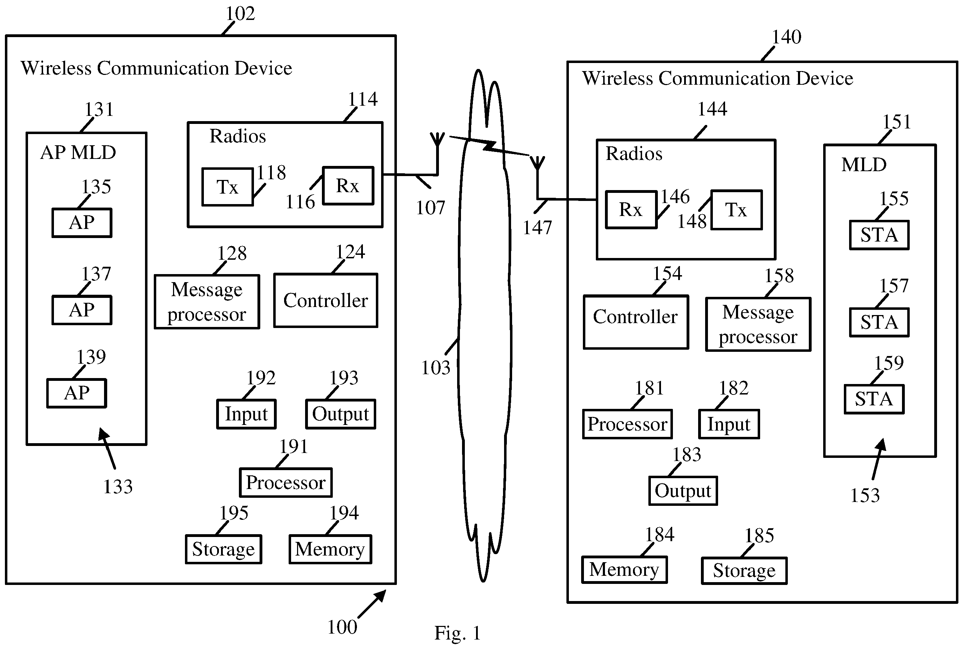

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102 and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternative include one or more channels in an mmWave wireless communication frequency band.

In other aspects, WM 103 may include any other type of channel over any other frequency band.

In some demonstrative aspects, device 102 and/or device 140 may include one or more radios including circuitry and/or logic to perform wireless communication between devices 102, 140 and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S 1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a WiFi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of any other additional or alternative type of STA.

In other aspects, device 102 and/or device 140 may include, operate as, perform the role of, and/or perform one or more functionalities of, any other wireless device and/or station, e.g., a WLAN STA, a WiFi STA, and the like.

In some demonstrative aspects, device 102 and/or device 140 may be configured operate as, perform the role of, and/or perform one or more functionalities of, an access point (AP), e.g., an EHT AP STA.

In some demonstrative aspects, device 102 and/or device 140 may be configured to operate as, perform the role of, and/or perform one or more functionalities of, a non-AP STA, e.g., an EHT non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102 and/or 140 may be configured to communicate in an EHT network, and/or any other network.

In some demonstrative aspects, devices 102 and/or 140 may be configured to operate in accordance with one or more Specifications, for example, including one or more *IEEE 802.11 Specifications*, e.g., an *IEEE 802. 11-2020 Specification*, an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity and has more than one affiliated STA and has a single MAC service access point (SAP) to LLC, which includes one MAC data service. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to cause, trigger, instruct and/or control device 102 to operate as, perform a role of, and/or perform one or more operations and/or functionalities of, an AP MLD 131 including a plurality of AP STAs 133, e.g., including an AP STA 135, an AP STA 137 and/or an AP STA 139. In some aspects, as shown in Fig. 1, AP MLD 131 may include three AP STAs. In other aspects, AP MLD 131 may include any other number of AP STAs.

In one example, AP STA 135, AP STA 137 and/or AP STA 139 may operate as, perform a role of, and/or perform one or more operations and/or functionalities of, an EHT AP STA. In other aspects, AP STA 135, AP STA 137 and/or AP STA 139 may perform any other additional or alternative functionality.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, the radios 114 utilized by APs 133 may be implemented as separate radios. In other aspects, the radios 114 utilized by APs 133 may be implemented by one or more shared and/or common radios and/or radio components.

In other aspects, controller 124 may be configured to cause, trigger, instruct and/or control device 102 to operate as, perform a role of, and/or perform one or more operations and/or functionalities of, any other additional or alternative entity and/or STA, e.g., a single STA, multiple STAs, and/or a non-MI,D entity.

In some demonstrative aspects, controller 154 may be configured to cause, trigger, instruct and/or control device 140 to operate as, perform a role of, and/or perform one or more operations and/or functionalities of, an MLD 151 including a plurality of STAs 153, e.g., including a STA 155, a STA 157 and/or a STA 159. In some aspects, as shown in Fig. 1, MLD 151 may include three STAs. In other aspects, MLD 151 may include any other number of STAs.

In one example, STA 155, STA 157 and/or STA 159 may operate as, perform a role of, and/or perform one or more operations and/or functionalities of, an EHT STA. In other aspects, STA 155, STA 157 and/or STA 159 may perform any other additional or alternative functionality.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to cause, trigger, instruct and/or control MLD 151 to operate as, perform a role of, and/or perform one or more operations and/or functionalities of, a non-AP MLD. For example, STA 155, STA 157 and/or STA 159 may operate as, perform a role of, and/or perform one or more operations and/or functionalities of, a non-AP EHT STA.

In some demonstrative aspects, controller 154 may be configured to cause, trigger, instruct and/or control MLD 151 to operate as, perform a role of, and/or perform one or more operations and/or functionalities of, an AP MLD. For example, STA 155, STA 157 and/or STA 159 may operate as, perform a role of, and/or perform one or more operations and/or functionalities of, an AP EHT STA.

In other aspects controller 154 may be configured to cause, trigger, instruct and/or control device 140 to operate as, perform a role of, and/or perform one or more operations and/or functionalities of, any other additional or alternative entity and/or STA, e.g., a single STA, multiple STAs, and/or a non-MI,D entity.

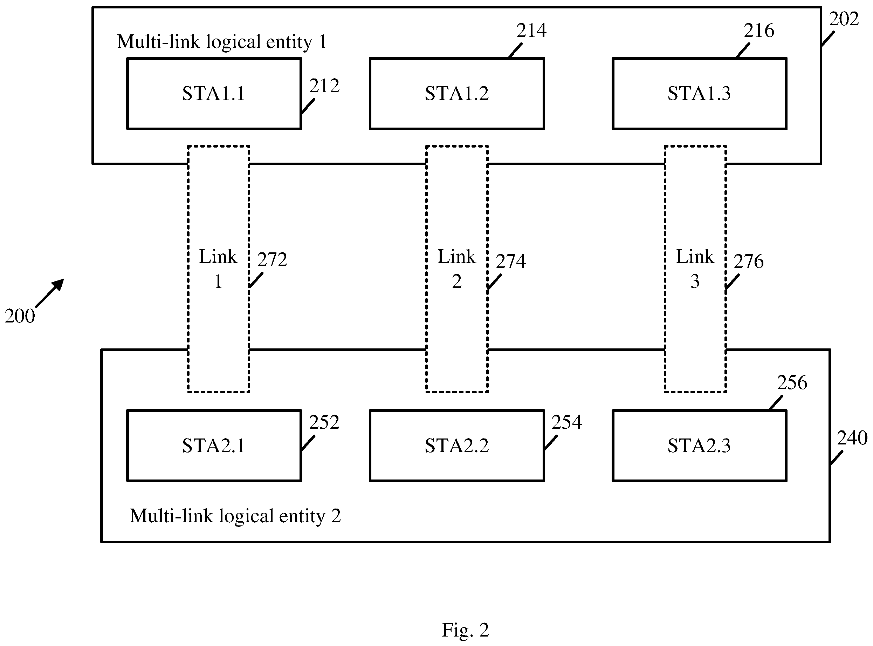

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, and a STA 216. In one example, AP MLD 131 (Fig. 1) may perform one or more operations, one or more functionalities, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, and a STA 256. In one example, MLD 151 (Fig. 1) may perform one or more operations, one or more functionalities, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, and/or a link 276 between STA 216 and STA 256.

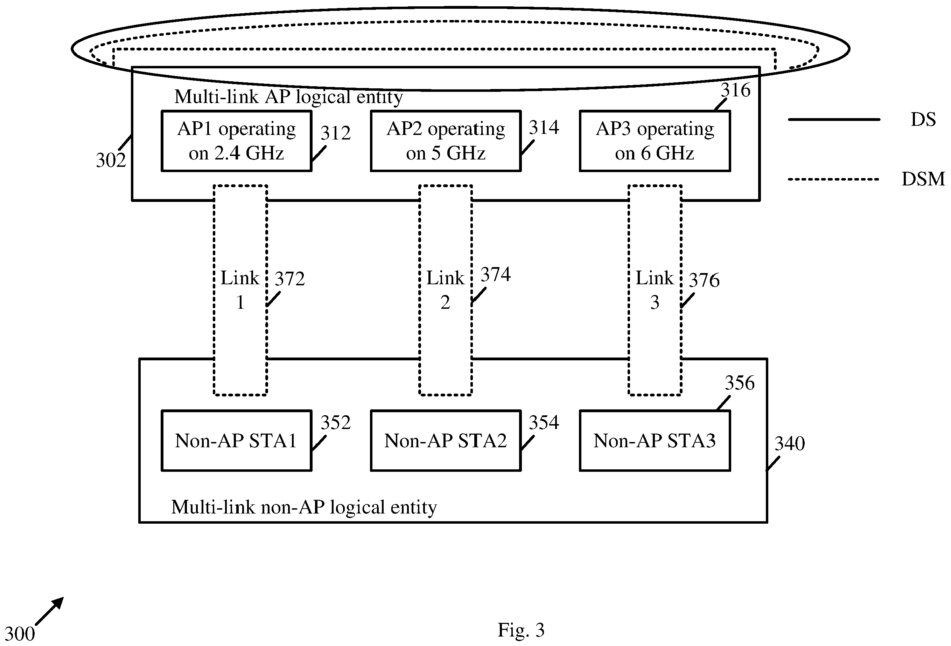

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, and an AP STA 316. In one example, AP MLD 131 (Fig. 1) may perform one or more operations, one or more functionalities, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, and a non-AP STA 356. In one example, MLD 151 (Fig. 1) may perform one or more operations, one or more functionalities, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, and/or a link 376 between AP STA 316 and non-AP STA 356.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, and/or AP STA 316 may be configured to communicate over a 6GHz frequency band. In other aspects, AP STA 312, AP STA 314, and/or AP STA 316, may be configured to communicate over any other additional or alternative wireless communication frequency bands.

Referring back to Fig. 1, in some demonstrative aspects, devices 102 and/or 140 may be configured to implement one or more operations of a protocol for an AP (also referred to as a "Coordinator AP") to allocate time within its obtained Transmit Opportunity (TXOP) to at least one STA (also referred to as an "allocated STA"), e.g., as described below.

In some demonstrative aspects, the allocated STA may include a non-AP STA, e.g., associated with the Coordinator AP, e.g., as described below.

In some demonstrative aspects, devices 102 and/or 140 may be configured to implement one or more operations of a protocol for an AP to allocate time within its obtained TXOP, e.g., to an associated STA, for example, for peer-to-peer (P2P) communication and/or any other type of communication, e.g., in accordance with the *IEEE 802.11be Specification.*

In some demonstrative aspects, the allocated STA may include another AP, e.g., as described below.

In some demonstrative aspects, devices 102 and/or 140 may be configured to implement one or more operations of a protocol wherein an AP (Coordinator AP) may allocate time within its obtained TXOP to another AP (also referred as a "Coordinated AP").

In some demonstrative aspects, devices 102 and/or 140 may be configured to implement one or more operations of a signaling protocol, which may be configured to provide a technical solution to support the Coordinator AP to know how much time an allocated STA needs, for example, in order to prevent a problem of over-allocation or under-allocation. For example, the signaling protocol may be configured to provide a technical solution to support a way for the allocated STA to inform the TXOP holder AP about resource requirements of the allocated STA, e.g., as described below.

For example, a non-AP STA may utilize a Quality of Service (QoS) characteristics element to signal QoS information to an AP, e.g., in accordance with the *IEEE 802.11be Specification.*

For example, a STA may inform its associated AP about the QoS requirements of the STA, for example, for a P2P link, in semi-static manner, for example, by including a QoS characteristics element in a Stream classification service (SCS) Request frame transmitted from the STA to the AP.

For example, the QoS characteristics element may include information on a per P2P link basis. For example, the QoS characteristics element may include, e.g., per P2P link, information of a Minimum and Maximum Service Interval, a Minimum Data Rate, a Delay Bound, a Maximum MSDU Size, a Service Start Time, a Mean Data Rate, a Burst Size, MSDU Lifetime, a Medium Time, a link ID, a Medium Time, a bandwidth, and/or any other additional or alternative information.

For example, an associated non-AP STA may utilize an Aggregated Control (A-Ctrl) field to signal resource requirements to an AP.

For example, the associated STA may utilize an A-Ctrl field, e.g., configured as a P2P Buffer Status Report (BSR) Control subfield, to dynamically signal to the associated AP requirements for a P2P link. In one example, the P2P BSR Control subfield may be configured to include a Channel Width subfield and/or a Required Medium Time subfield.

For example, the QoS characteristics element and/or the P2P BSR Control subfield may be configured for transmission from associated STAs to their associated APs.

In some demonstrative aspects, for example, in some implementations, scenarios, use cases, and/or deployments, there may be a need to provide a technical solution to support a STA in providing information to an AP, for example, even when the STA is in an unassociated state, e.g., when the STA is not associated with the AP.

In some demonstrative aspects, device 102 and/or device 140 may be configured to implement operations of a QoS signaling mechanism, which may be configured to provide a technical solution, for example, to support signaling of QoS information, e.g., universally, for example, for over-the-air (OTA) multi-AP communication, which may involve unassociated STAs, e.g., as described below.

In some demonstrative aspects, device 102 and/or device 140 may be configured to implement operations of the QoS signaling mechanism, which may be configured to provide a technical solution to support, for example, signaling of P2P resource requirements information between two unassociated STAs, e.g., as described below.

In some demonstrative aspects, the QoS signaling mechanism may be configured to provide a technical solution to support management (Mgt) frame based signaling of QoS information, e.g., as described below.

In some demonstrative aspects, the QoS signaling mechanism may be configured to provide a technical solution to support control (Ctrl) frame based signaling of QoS information, e.g., as described below.

In some demonstrative aspects, the QoS signaling mechanism may be configured to provide a technical solution to support operation, e.g., uniformly across associated and unassociated STAs, for example, to provide a common solution for a resource requirement problem, e.g., as described below.

In some demonstrative aspects, for example, in a multi-AP scheme, a coordinator AP, e.g., each coordinator AP, may be configured to know each other's capability and operations information (info), for example, through some OTA frame exchange, e.g., which may be defined in accordance with the *IEEE 802.11 Specification* and/or in accordance with any other protocol or mechanism.

In some demonstrative aspects, a STA may be at an associated state with respect to an AP, e.g., when the STA is associated with the AP. For example, the STA may be at the associated state based on an association between the STA and the AP. For example, the association may include a service to establish a mapping between an AP or a personal basic service set (PBSS) control point (PCP), and a STA, and to enable STA invocation of distribution system services (DSSs). In other aspects, the association may be defined according to any other additional or alternative service, protocol and/or operation.

In some demonstrative aspects, a STA may be at an unassociated state with respect to an AP, e.g., when the STA is unassociated with the AP. For example, the STA may be at the unassociated state, for example, prior to association and/or when association is not performed. For example, a STA may be unassociated with an AP, for example, prior to, and/or without, performing operations to establish a mapping between the unassociated STA and the AP.

In some demonstrative aspects, device 102 and/or device 140 may be configured to implement one or more operations of a QoS signaling mechanism, which may be configured to provide a technical solution to support a STA, for example an associated STA or an unassociated STA, to request and/or report QoS information to an AP, for example, with respect to one or more QoS flows in which the STA participates, e.g., as described below.

In some demonstrative aspects, the QoS information may include airtime information corresponding to the one or more QoS flows the STA participates in, e.g., as described below.

In some demonstrative aspects, the QoS information may include channel BW information corresponding to the one or more QoS flows the STA participates in, e.g., as described below.

In some demonstrative aspects, the QoS information may be signaled by the STA to the AP in a semi-static manner, e.g., as described below.

In some demonstrative aspects, the QoS information may be signaled by the STA to the AP in a dynamic manner, e.g., as described below.

In some demonstrative aspects, the QoS information may be signaled by the STA to the AP via a Ctrl frame, e.g., as described below.

In some demonstrative aspects, the QoS information may be signaled by the STA to the AP via an Mgt frame, e.g., as described below.

In some demonstrative aspects, the QoS information may be solicited by a control frame transmitted by an AP, e.g., as described below.

In other aspects, the QoS information may be solicited, negotiated, generated, transmitted, provided, and/or processed using any other additional or alternative technique.

In some demonstrative aspects, controller 154 may be configured to control, trigger, cause, and/or instruct a STA implemented by device 140 to set a channel BW field to indicate a channel BW, e.g., as described below.

In some demonstrative aspects, controller 154 may be configured to control, trigger, cause, and/or instruct the STA implemented by device 140 to set airtime information in an airtime field, e.g., as described below.

In some demonstrative aspects, the airtime information may be configured to indicate a required time duration for the STA to communicate one or more frame exchanges of a QoS flow over the channel BW, e.g., as described below.

In some demonstrative aspects, controller 154 may be configured to control, trigger, cause, and/or instruct the STA implemented by device 140 to transmit to an AP a frame including the channel BW field and/or the airtime field, e.g., as described below.

In some demonstrative aspects, the frame may include a management frame, e.g., as described below.

In some demonstrative aspects, the management frame may include a STA airtime request Information Element (IE) including the airtime field and the channel BW field, e.g., as described below.

In some demonstrative aspects, the frame may include a control frame, e.g., as described below.

In other aspects, the frame may include any other type of frame.

In some demonstrative aspects, controller 154 may be configured to control, trigger, cause, and/or instruct the STA implemented by device 140 to transmit the frame in an un-solicited non Trigger Based (TB) PPDU, e.g., as described below.

In some demonstrative aspects, controller 154 may be configured to control, trigger, cause, and/or instruct the STA implemented by device 140 to transmit the frame to the AP, for example, based on request from the AP, e.g., as described below.

In some demonstrative aspects, controller 154 may be configured to control, trigger, cause, and/or instruct the STA implemented by device 140 to identify a request from the AP for the airtime information, for example, based on a trigger frame from the AP, e.g., as described below.

In some demonstrative aspects, controller 154 may be configured to control, trigger, cause, and/or instruct the STA implemented by device 140 to transmit the frame to the AP, for example, based on the request from the AP for the airtime information, e.g., as described below.

In other aspects, the frame including the airtime information may be transmitted in any other way and/or based on any other criteria.

In some demonstrative aspects, controller 154 may be configured to control, trigger, cause, and/or instruct the STA implemented by device 140 to transmit the frame at an unassociated state of the STA, at which the STA is unassociated with the AP, e.g., as described below.

In other aspects, the frame may be transmitted by the STA at an associated state.

In some demonstrative aspects, the STA implemented by device 140 may include a non-AP STA. For example, controller 154 may be configured to control, trigger, cause, and/or instruct a non-AP STA implemented by device 140 to transmit the frame to an AP, e.g., as described below.

In other aspects, the STA implemented by device 140 may include an AP STA. For example, controller 154 may be configured to control, trigger, cause, and/or instruct an AP STA implemented by device 140 to transmit the frame to another AP, e.g., as described below.

In some demonstrative aspects, controller 124 may be configured to control, trigger, cause, and/or instruct an AP implemented by device 102 to process a frame received from a STA, e.g., as described below.

In some demonstrative aspects, the received frame may include the frame transmitted by the STA implemented by device 140.

In some demonstrative aspects, the AP implemented by device 102 may receive the frame from an AP STA. For example, controller 124 may be configured to control, trigger, cause, and/or instruct the AP STA implemented by device 102 to process the frame from an AP implemented by device 140.

In some demonstrative aspects, the AP implemented by device 102 may receive the frame from a non-AP STA. For example, controller 124 may be configured to control, trigger, cause, and/or instruct the AP STA implemented by device 102 to process the frame from a non-AP STA implemented by device 140.

In some demonstrative aspects, controller 124 may be configured to control, trigger, cause, and/or instruct the AP implemented by device 102 to process the received frame to identify a channel BW, for example, based on a channel BW field in the received frame from the STA, e.g., as described below.

In some demonstrative aspects, controller 124 may be configured to control, trigger, cause, and/or instruct the AP implemented by device 102 to identify airtime information in an airtime field of the frame, e.g., as described below.

In some demonstrative aspects, the airtime information may indicate to the AP a required time duration for the STA to communicate one or more frame exchanges of a QoS flow over the channel BW, e.g., as described below.

In some demonstrative aspects, controller 124 may be configured to control, trigger, cause, and/or instruct the AP implemented by device 102 to schedule communications of the STA over the channel BW, for example, based on the airtime information, e.g., as described below.

In some demonstrative aspects, controller 124 may be configured to control, trigger, cause, and/or instruct the AP implemented by device 102 to transmit to the STA a trigger frame configured to indicate a request for the airtime information, e.g., as described below. For example, the AP implemented by device 102 may receive the frame from the STA implemented by device 140, for example, in response to the request for the airtime information.

In some demonstrative aspects, controller 124 may be configured to control, trigger, cause, and/or instruct the AP implemented by device 102 to process the frame including the airtime information from a STA at an unassociated state, at which the STA is unassociated with the AP implemented by device 102. For example, the AP implemented by device 102 may receive the frame from the STA implemented by device 140, for example, when the STA implemented by device 140 is unassociated with the AP implemented by device 102.

In some demonstrative aspects, controller 154 may be configured to control, trigger, cause, and/or instruct the STA implemented by device 140 to set importance information in an importance-based field in the frame including the airtime information , e.g., as described below.

In some demonstrative aspects, the importance information may be configured to indicate an importance of the QoS flow, e.g., as described below.

In some demonstrative aspects, controller 124 may be configured to control, trigger, cause, and/or instruct the AP implemented by device 102 to schedule the communications of the STA over the channel BW, for example, based on the importance information in the frame from the STA.

In some demonstrative aspects, controller 154 may be configured to control, trigger, cause, and/or instruct the STA implemented by device 140 to set priority information in a priority field in the frame including the airtime information, e.g., as described below.

In some demonstrative aspects, the priority information may indicate a priority level of the QoS flow, e.g., as described below.

In some demonstrative aspects, controller 124 may be configured to control, trigger, cause, and/or instruct the AP implemented by device 102 to schedule the communications of the STA over the channel BW, for example, based on the priority information in the priority field in the frame from the STA.

In some demonstrative aspects, controller 154 may be configured to control, trigger, cause, and/or instruct the STA implemented by device 140 to set packet delivery ratio information in a packet delivery field in the frame including the airtime information, e.g., as described below.

In some demonstrative aspects, the packet delivery ratio information may correspond to a ratio between dropped packets and expected packet transmissions for the QoS flow, e.g., as described below.

In some demonstrative aspects, controller 124 may be configured to control, trigger, cause, and/or instruct the AP implemented by device 102 to schedule the communications of the STA over the channel BW, for example, based on the packet delivery ratio information in the packet delivery field in the frame from the STA.

In some demonstrative aspects, controller 154 may be configured to control, trigger, cause, and/or instruct the STA implemented by device 140 to set periodicity information in a periodicity field in the frame including the airtime information, e.g., as described below.

In some demonstrative aspects, the periodicity information may be configured to indicate whether the QoS flow includes periodic traffic or aperiodic traffic, e.g., as described below.

In some demonstrative aspects, controller 124 may be configured to control, trigger, cause, and/or instruct the AP implemented by device 102 to schedule the communications of the STA over the channel BW, for example, based on the periodicity information in the periodicity field in the frame from the STA.

In some demonstrative aspects, controller 154 may be configured to control, trigger, cause, and/or instruct the STA implemented by device 140 to set periodicity duration information in a periodicity duration field in the frame including the airtime information, e.g., as described below.

In some demonstrative aspects, the periodicity duration information may be configured to indicate a periodicity duration of periodic traffic in the QoS flow, e.g., as described below.

In some demonstrative aspects, controller 124 may be configured to control, trigger, cause, and/or instruct the AP implemented by device 102 to schedule the communications of the STA over the channel BW, for example, based on the periodicity duration information in the periodicity duration field in the frame from the STA.

In some demonstrative aspects, controller 154 may be configured to control, trigger, cause, and/or instruct the STA implemented by device 140 to set timing information in a timing field in the frame including the airtime information, e.g., as described below.

In some demonstrative aspects, the timing information may be configured to indicate a future time for the one or more frame exchanges of the QoS flow, e.g., as described below.

In some demonstrative aspects, controller 124 may be configured to control, trigger, cause, and/or instruct the AP implemented by device 102 to schedule the communications of the STA over the channel BW, for example, based on the timing information in the timing field in the frame from the STA.

In some demonstrative aspects, controller 154 may be configured to control, trigger, cause, and/or instruct the STA implemented by device 140 to set deadline information in a deadline field in the frame including the airtime information, e.g., as described below.

In some demonstrative aspects, the deadline information may be configured to indicate a deadline time of a scheduled period to be scheduled by the AP for the one or more frame exchanges of the QoS flow, e.g., as described below.

In some demonstrative aspects, controller 124 may be configured to control, trigger, cause, and/or instruct the AP implemented by device 102 to schedule the communications of the STA over the channel BW, for example, based on the deadline information in the deadline field in the frame from the STA.

In some demonstrative aspects, controller 154 may be configured to control, trigger, cause, and/or instruct the STA implemented by device 140 to set direction information in a direction field in the frame including the airtime information, e.g., as described below.

In some demonstrative aspects, the direction information may be configured to indicate a directionality of the QoS flow, e.g., as described below.

In some demonstrative aspects, controller 124 may be configured to control, trigger, cause, and/or instruct the AP implemented by device 102 to schedule the communications of the STA over the channel BW, for example, based on the direction information in the direction field in the frame from the STA.

In some demonstrative aspects, controller 154 may be configured to control, trigger, cause, and/or instruct the STA implemented by device 140 to set punctured channel information in a puncturing field in the frame including the airtime information, e.g., as described below.

In some demonstrative aspects, the punctured channel information may be configured to indicate a configuration of a channel puncturing of the channel BW, e.g., as described below.

In some demonstrative aspects, controller 124 may be configured to control, trigger, cause, and/or instruct the AP implemented by device 102 to schedule the communications of the STA over the channel BW, for example, based on the punctured channel information in the puncturing field in the frame from the STA.

In some demonstrative aspects, controller 154 may be configured to control, trigger, cause, and/or instruct the STA implemented by device 140 to set one or more link Identifiers (IDs) in a link ID field in the frame including the airtime information, e.g., as described below.

In some demonstrative aspects, the one or more link IDs may be configured to identify one or more links for the QoS flow, e.g., as described below.

In some demonstrative aspects, controller 124 may be configured to control, trigger, cause, and/or instruct the AP implemented by device 102 to schedule the communications of the STA over the channel BW, for example, based on the one or more link IDs in the link ID field in the frame from the STA.

In some demonstrative aspects, the airtime field including the airtime information and/or the BW field may be included as part of in an Aggregated Control (A-control) field in a MAC header of a frame, e.g., as described below.

In some demonstrative aspects, controller 154 may be configured to control, trigger, cause, and/or instruct the STA implemented by device 140 to set the airtime field including the airtime information in an A-control field in a MAC header of a frame, e.g., as described below.

In some demonstrative aspects, controller 154 may be configured to control, trigger, cause, and/or instruct the STA implemented by device 140 to set the channel BW field in the A-control field, e.g., as described below.

In some demonstrative aspects, controller 154 may be configured to control, trigger, cause, and/or instruct the STA implemented by device 140 to set a control identifier subfield of the A-control field to indicate an A-control field type for a STA airtime request, e.g., as described below.

In some demonstrative aspects, controller 154 may be configured to control, trigger, cause, and/or instruct the STA implemented by device 140 to set the airtime field and/or the channel BW field in a control information subfield of the A-control field, e.g., as described below.

In some demonstrative aspects, controller 124 may be configured to control, trigger, cause, and/or instruct the AP implemented by device 102 to identify the airtime field and/or the channel BW field in the A-control of the frame from the STA.

In some demonstrative aspects, controller 124 may be configured to control, trigger, cause, and/or instruct the AP implemented by device 102 to access the airtime field and/or the channel BW field in the control information subfield of the A-control field, for example, based on a determination that the control identifier subfield of the A-control field indicates the A-control field type for the STA airtime request.

In other demonstrative aspects, the airtime field including the airtime information and/or the BW field may be included in any other part of any other frame format.

In some demonstrative aspects, device 102 and/or device 140 may be configured to implement one or more operations of a QoS signaling mechanism, which may be configured to provide a technical solution to support communication of QoS information between two or more STAs, for example, STAs implemented by device 102 and/or device 140, e.g., as described below.

In some demonstrative aspects, the QoS information transmitted by a STA may include, for example, airtime information, which may be configured to indicate a time required by the STA to complete one or more frame exchanges, e.g., including transmission and/or reception, for example, with some granularity.

In some demonstrative aspects, the airtime information may be configured to indicate a time, as a function of a fixed channel BW, or for signaled channel BW information.

In other aspects, the airtime information may be configured to include any other additional or alternative type of information corresponding to one or more frame exchanges to be performed by the STA.

In some demonstrative aspects, the QoS information may include one or more additional parameters corresponding, for example, to the one or more QoS flows for which the airtime information is provided, e.g., as described below.

In some demonstrative aspects, the STA transmitting the airtime information may signal additional information corresponding to the one or more QoS flows (signaled QoS flows) for which the STA reports an airtime requirement, e.g., as described below.

In some demonstrative aspects, the STA transmitting the airtime information corresponding to a signaled QoS flow may signal an indication of an importance of the signaled QoS flow. In one example, the STA may convey the importance of the signaled QoS flow, for example, through a Priority Level parameter, e.g., similar to User Priority values. In one example, the STA may convey the importance of the signaled QoS flow, for example, by signaling a percentage of packets that can be dropped, e.g., similar to an MSDU Delivery field in a QoS characteristics element. In other aspects, the STA may convey the importance of the signaled QoS flow by any other additional or alternative field, parameter and/or value.

In some demonstrative aspects, the STA transmitting the airtime information corresponding to a signaled QoS flow may signal periodicity information, which may be configured to indicate, for example, whether the signaled QoS flow includes periodic traffic, for example, Extended Reality (XR) traffic or other type of periodic traffic, or aperiodic traffic, for example, file transfer traffic, or any other type of aperiodic traffic. For example, in case the QoS flow includes periodic traffic, the STA may further signal periodicity duration information, e.g., time-window information, which may indicate at least a periodicity duration of the periodic traffic in the signaled QoS flow.

In some demonstrative aspects, the STA transmitting the airtime information corresponding to a signaled QoS flow may signal timing information, which may be configured to indicate, for example, a time offset in future where the airtime information and/or any other additional information is to be applied for the signaled QoS flow. For example, the timing information may be implemented to provide a technical solution to support the STA in signaling the QoS information, for example, when the STA does not have any corresponding QoS traffic at the moment but the STA expects that the QoS traffic is to be generated in the near-future, e.g., in case of XR traffic.

In some demonstrative aspects, the STA transmitting the airtime information corresponding to a signaled QoS flow may signal deadline information, which may be configured, for example, to indicate a maximum time and/or a deadline time before which the STA needs to be served, e.g., by the AP to which the airtime information is addressed.

In some demonstrative aspects, the STA transmitting the airtime information corresponding to a signaled QoS flow may signal direction information, which may be configured, for example, to indicate how the STA plans to use an allocated time to be allocated and/or scheduled based on the airtime information, e.g., by the AP to which the airtime information is addressed. For example, the direction information may indicate a directionality of the signaled QoS flow to be communicated during the allocated time, e.g., DL traffic, LTL traffic, and/or bidirectional traffic.

In some demonstrative aspects, the STA transmitting the airtime information corresponding to a signaled QoS flow may signal punctured channel information, which may be configured, for example, to indicate a configuration of a channel puncturing of a channel BW, e.g., to which the airtime information corresponds. For example, the punctured channel information may include information or a subset of the information that the STA advertises in a Disabled Channel Bitmap.

In some demonstrative aspects, the STA transmitting the airtime information corresponding to a signaled QoS flow may signal one or more link IDs for which the signaled QoS flow applies. For example, the STA may use the one or more link IDs to report requirements for a link A, e.g., a 2.4 GHz link, for example, by transmitting one or more frames in Link B, e.g., a 6 GHz link, and including in the frames the airtime information and/or the other QoS information corresponding to the link A.

In some demonstrative aspects, the STA may be configured to configure a frame to report the airtime information and/or the other QoS information for a plurality of QoS flows. For example, the STA may be configured to aggregate in the same frame the airtime information and/or the other QoS information for a plurality of QoS flows.

In some demonstrative aspects, a frame format may be configured to support signaling of one or more parameters, e.g., some parameters, which may be signaled by the STA, e.g., always signaled, for example, while the presence of one or more other parameters may be signaled, e.g., in a separate Control field of the frame.

In some demonstrative aspects, an AP, for example, any AP, e.g., including a Mobile AP and/or P2P GO, may share the airtime information and/or the other QoS information of one or more QoS flows of the AP, with another AP.

In some demonstrative aspects, an associated STA interface of a STA may share the airtime information and/or the other QoS information of one or more QoS flows of the STA with an AP, e.g., an AP associating with the STA. For example, the associated STA interface may send to the associating AP the airtime information and/or the other QoS information of one or more P2P links of a collocated unassociated STA interface of the associated STA.

In some demonstrative aspects, an unassociated non-AP STA, e.g., any unassociated non-AP STA, may share the airtime information and/or the other QoS information of one or more QoS flows of the unassociated non-AP STA with an AP, e.g., an infrastructure AP.

In some demonstrative aspects, the STA may be configured to signal the airtime information and/or the other QoS information of one or more QoS flows of the STA, for example, in an unsolicited non-TB PPDU.

In some demonstrative aspects, the STA may be configured to signal the airtime information and/or the other QoS information of one or more QoS flows of the STA, for example, after receiving a trigger frame, e.g., a special trigger frame, from an AP. For example, the special trigger frame may be addressed to the STA. For example, the trigger frame from the AP may be configured to indicate to the STA a request for the airtime information and/or the other QoS information of one or more QoS flows of the STA. In one example, the STA may respond to the trigger frame from the AP, for example, by including the airtime information and/or the other QoS information of one or more QoS flows of the STA, for example, in a TB PPDU. For example, the response to the trigger frame may be included in the TB PPDU, for example, in case a coordinator AP solicits multiple reports from multiple STAs. In another example, the response to the trigger frame may be included in any other type of frame, for example, a non-TB PPDU.

In some demonstrative aspects, the STA may be configured to signal the airtime information and/or the other QoS information of one or more QoS flows of the STA, for example, in a management frame, e.g., as described below.

In some demonstrative aspects, device 140 and/or device 102 may communicate a management frame to signal QoS information corresponding to a QoS flow, e.g., described below.

In some demonstrative aspects, device 140 and/or device 102 may be configured to signal the QoS information inside a frame, e.g., an Mgt frame, which may be exchanged between two STAs, e.g., unassociated STAs.

In some demonstrative aspects, the management frame may be configured to include the QoS information corresponding to a QoS flow, for example, as part of a frame body of the management frame.

In some demonstrative aspects, the management frame may be configured to include the QoS information corresponding to a QoS flow, for example, as part of an IE, which may be configured to carry the QoS information corresponding to the QoS flow, e.g., as described below.

In some demonstrative aspects, the IE including the QoS information may be included as part of a management frame that a STA may be allowed to transmit to an AP, for example, when the STA is unassociated with the AP, for example, a probe request frame, e.g., as described below.

In some demonstrative aspects, the IE including the QoS information may be included as part of a management frame that a STA may be allowed to transmit to an AP, for example, when the STA is associated with the AP, e.g., as described below.

In some demonstrative aspects, the IE including the QoS information may be included as part of a SCS request frame, and/or any other additional or alternative type of management frame.

In some demonstrative aspects, the STA may be configured to signal the airtime information and/or the other QoS information of one or more QoS flows of the STA, for example, in a control frame, e.g., as described below.

In some demonstrative aspects, the STA may be configured to signal the airtime information and/or the other QoS information of one or more QoS flows of the STA, for example, in an A-Control field of a frame, e.g., as described below.

In some demonstrative aspects, the airtime information and/or the other QoS information of one or more QoS flows may be signaled in an A-Ctrl field of frames which may be exchanged, for example, by two unassociated STAs, for example, under one or more conditions, e.g., some specific conditions. For example, the airtime information and/or the other QoS information of one or more QoS flows may be signaled in the A-Control field of a QoS null frame, e.g., only in a QoS Null frame.

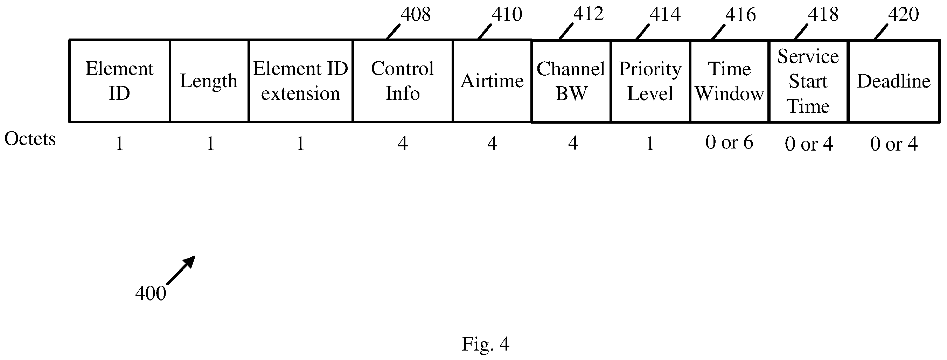

Reference is made to Fig. 4, which schematically illustrates an Information Element (IE) format of an airtime request IE 400, in accordance with some demonstrative aspects.

In some demonstrative aspects, device 140 (Fig. 1) and/or device 102 (Fig. 1) may be configured to communicate a frame including airtime request IE 400. For example, device 140 (Fig. 1) may be configured to transmit to device 102 (Fig. 1) the frame including airtime request IE 400; and/or device 102 (Fig. 1) may be configured to process the airtime request IE 400 in the frame received from device 140 (Fig. 1).

In some demonstrative aspects, airtime request IE 400 may be communicated as part of a management frame, e.g., as described below. In other aspects, airtime request IE 400 may be communicated as part of any other additional or alternative type of frame.

In some demonstrative aspects, device 140 (Fig. 1) and/or device 102 (Fig. 1) may communicate an Mgt frame including airtime request IE 400, for example, to signal QoS information corresponding to a QoS flow.

In some demonstrative aspects, device 140 (Fig. 1) and/or device 102 (Fig. 1) may communicate airtime request IE 400 including the QoS information to be signaled inside a frame, e.g., an Mgt frame, which may be exchanged between two STAs, e.g., unassociated STAs.

In some demonstrative aspects, the Mgt frame may include an IE, e.g., airtime request IE 400, which includes the QoS information corresponding to a QoS flow.

In some demonstrative aspects, airtime request IE 400 may be included as part of a management frame that a STA may be allowed to transmit to an AP, for example, when the STA is unassociated with the AP. In one example, airtime request IE 400 may be included as part of a probe request frame.

In some demonstrative aspects, airtime request IE 400 may be included as part of a management frame that a STA may be allowed to transmit to an AP, for example, when the STA is associated with the AP.

In some demonstrative aspects, airtime request IE 400 may be included as part of a SCS request frame, and/or any other additional or alternative type of management frame.

In some demonstrative aspects, as shown in Fig. 4, airtime request IE 400 may include an airtime field 410. For example, airtime field 410 may include airtime information, for example, to indicate a required time duration for a STA transmitting the airtime request IE 400, e.g., a STA implemented by device 140 (Fig. 1), to communicate one or more frame exchanges of a QoS flow over a channel BW.

In some demonstrative aspects, as shown in Fig. 4, airtime request IE 400 may include a channel BW field 412, for example, to indicate the channel BW.

In some demonstrative aspects, as shown in Fig. 4, airtime request IE 400 may include a priority field 414 configured to include priority information, for example, to indicate a priority level and/or an importance of the QoS flow.

In some demonstrative aspects, as shown in Fig. 4, airtime request IE 400 may include a time window field 416 configured to include information, for example, to indicate time window, e.g., a periodicity duration, for the one or more frame exchanges of the QoS flow.

In some demonstrative aspects, as shown in Fig. 4, airtime request IE 400 may include a service start time field 418 configured to include timing information, for example, to indicate a future time for the one or more frame exchanges of the QoS flow.

In some demonstrative aspects, as shown in Fig. 4, airtime request IE 400 may include a deadline field 420 configured to include deadline information, for example, to indicate a deadline time of a scheduled period to be scheduled by an AP which is to receive the airtime request IE 400, e.g., an AP implemented by device 102 (Fig. 1), for the one or more frame exchanges of the QoS flow.

In some demonstrative aspects, as shown in Fig. 4, airtime request IE 400 may include a control information field 408, which may include, for example, control information corresponding to the airtime request IE 400, e.g., as described below.

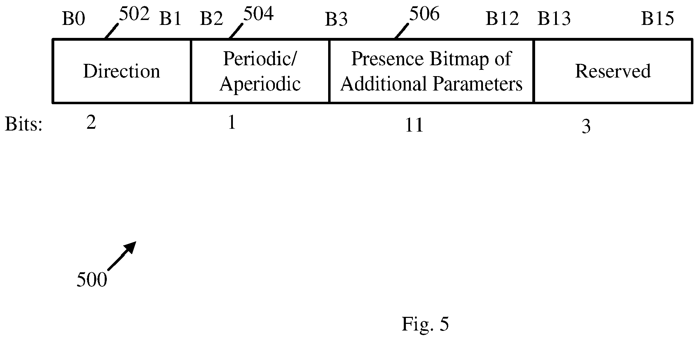

Reference is made to Fig. 5, which schematically illustrates a format of a control information field 500, in accordance with some demonstrative aspects.

In some demonstrative aspects, control information field 500 may be included as part of an airtime request IE, for example, to provide information corresponding to a signaled QoS flow to which the airtime request IE refers. For example, control information field 408 (Fig. 4) may include one or more fields of control information field 500, for example, to provide information corresponding to a signaled QoS flow to which the airtime request IE 400 (Fig. 1) refers.

In some demonstrative aspects, device 140 (Fig. 1) and/or device 102 (Fig. 1) may be configured to communicate a frame including an airtime request IE, e.g., airtime request IE 400 (Fig. 4), including one or more fields of control information field 500. For example, device 140 (Fig. 1) may be configured to transmit to device 102 (Fig. 1) a frame including the airtime request IE 400 (Fig. 4) including the control information field 500; and/or device 102 (Fig. 1) may be configured to process the control information field 500 in the frame received from device 140 (Fig. 1).

In some demonstrative aspects, as shown in Fig. 5, control information field 500 may include a direction field 502 configured to include direction information, for example, to indicate a directionality of the signaled QoS flow.

In some demonstrative aspects, as shown in Fig. 5, control information field 500 may include a periodicity field 504 configured to include periodicity information, for example, to indicate whether the signaled QoS flow includes periodic traffic or aperiodic traffic.

In some demonstrative aspects, as shown in Fig. 5, control information field 500 may include a presence bitmap field 506, for example, to indicate presence of any other additional parameter fields, e.g., as described below.

In some demonstrative aspects, an airtime request IE, e.g., airtime request IE 400 (Fig. 4), may be configured to include one or more fields, e.g., fields 410 (Fig. 4), 412 (Fig. 4), and/or 414 (Fig. 4), which may be configured for inclusion in the airtime request IE, e.g., by default, on a constant basis, and/or always.

In some demonstrative aspects, the airtime request IE, e.g., airtime request IE 400 (Fig. 4), may be configured to include one or more additional fields to include additional parameter information, e.g., fields 416 (Fig. 4), 418 (Fig. 4), and/or 420 (Fig. 4) and/or any other additional or alternative fields, which may be, for example, optionally included in the airtime request IE.

In some demonstrative aspects, presence bitmap field 506 may be configured to include a bitmap, which may be set, for example, to indicate whether or not the one or more additional fields are included in the airtime request IE carrying the control information field 500. In one example, the presence bitmap field 506 may be configured to include a bitmap, which may be set, for example, to indicate whether or not fields 416 (Fig. 4), 418 (Fig. 4), and/or 420 (Fig. 4) are present in the airtime request IE 400 (Fig. 4) carrying the control information field 500.

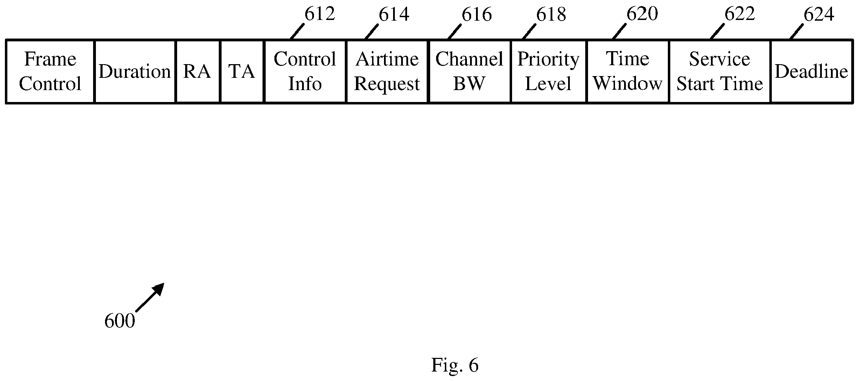

Reference is made to Fig. 6, which schematically illustrates a control frame format of a control frame 600, in accordance with some demonstrative aspects.

In some demonstrative aspects, device 140 (Fig. 1) and/or device 102 (Fig. 1) may be configured to communicate a frame including one or more fields of the control frame 600. For example, device 140 (Fig. 1) may be configured to transmit the control frame 600 to device 102 (Fig. 1); and/or device 102 (Fig. 1) may be configured to process one or more fields in the control frame 600 received from device 140 (Fig. 1).

In some demonstrative aspects, control frame 600 may be configured to signal QoS information corresponding to a QoS flow, e.g., as described below.

In some demonstrative aspects, as shown in Fig. 6, control frame 600 may include an airtime field 614. For example, airtime field 614 may include airtime information, for example, to indicate a required time duration for a STA transmitting the control frame 600, e.g., a STA implemented by device 140 (Fig. 1), to communicate one or more frame exchanges of a QoS flow over a channel BW.

In some demonstrative aspects, as shown in Fig. 6, control frame 600 may include a channel BW field 616, for example, to indicate the channel BW.

In some demonstrative aspects, as shown in Fig. 6, control frame 600 may include a priority field 618 configured to include priority information, for example, to indicate a priority level and/or an importance of the QoS flow.

In some demonstrative aspects, as shown in Fig. 6, control frame 600 may include a time window field 620 configured to include information, for example, to indicate time window, e.g., a periodicity duration, for the one or more frame exchanges of the QoS flow.

In some demonstrative aspects, as shown in Fig. 6, control frame 600 may include a service start time field 622 configured to include timing information, for example, to indicate a future time for the one or more frame exchanges of the QoS flow.

In some demonstrative aspects, as shown in Fig. 6, control frame 600 may include a deadline field 624 configured to include deadline information, for example, to indicate a deadline time of a scheduled period to be scheduled by an AP which is to receive the control frame 600, e.g., an AP implemented by device 102 (Fig. 1), for the one or more frame exchanges of the QoS flow.

In some demonstrative aspects, as shown in Fig. 6, control frame 600 may include a control information field 612, which may include, for example, control information corresponding to the control frame 600. For example, control information field 612 may include one or more fields of control information field 500 (Fig. 5). In one example, presence bitmap field 506 (Fig. 5) may be configured to include a bitmap, which may be set, for example, to indicate whether or not fields 416 (Fig. 4), 418 (Fig. 4), and/or 420 (Fig. 4) are present in the control frame 600 carrying the control information field 500 (Fig. 5).

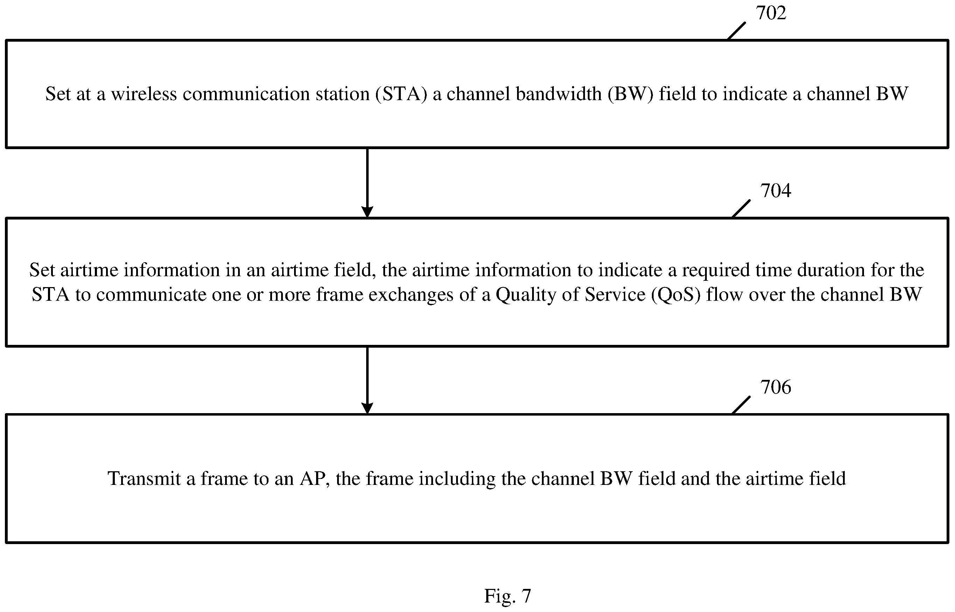

Reference is made to Fig. 7, which schematically illustrates a method of communicating airtime information corresponding to a QoS flow, in accordance with some demonstrative aspects. For example, one or more of the operations of the method of Fig. 7 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 702, the method may include setting at a STA a channel BW field to indicate a channel BW. For example, controller 154 (Fig. 1) may be configured to cause, trigger, and/or control a STA implemented by device 140 (Fig. 1) to set a channel BW field to indicate a channel BW, e.g., as described above.

As indicated at block 704, the method may include setting airtime information in an airtime field. For example, the airtime information may indicate a required time duration for the STA to communicate one or more frame exchanges of a QoS flow over the channel BW. For example, controller 154 (Fig. 1) may be configured to cause, trigger, and/or control the STA implemented by device 140 (Fig. 1) to set airtime information in an airtime field, e.g., as described above.

As indicated at block 706, the method may include transmitting to an AP a frame including the channel BW field and the airtime field. For example, controller 154 (Fig. 1) may be configured to cause, trigger, and/or control the STA implemented by device 140 (Fig. 1) to transmit to an AP, e.g., an AP implemented by device 102 (Fig. 1), a frame including the channel BW field and the airtime field, e.g., as described above.

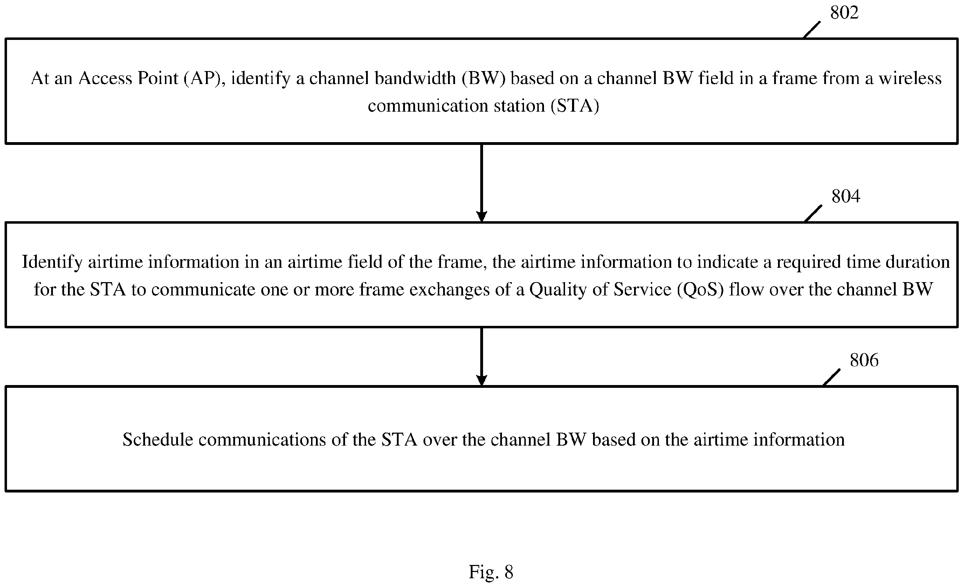

Reference is made to Fig. 8, which schematically illustrates a method of communicating airtime information corresponding to a QoS flow, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include identifying at an AP a channel BW based on a channel BW field in a frame from a STA. For example, controller 124 (Fig. 1) may be configured to cause, trigger, and/or control an AP implemented by device 102 (Fig. 1) to identify a channel BW based on a channel BW field in a frame from a STA, e.g., as described above.

As indicated at block 804, the method may include identifying airtime information in an airtime field of the frame. For example, the airtime information may indicate a required time duration for the STA to communicate one or more frame exchanges of a QoS flow over the channel BW. For example, controller 124 (Fig. 1) may be configured to cause, trigger, and/or control the AP implemented by device 102 (Fig. 1) to identify airtime information in an airtime field of the frame, e.g., as described above.

As indicated at block 806, the method may include scheduling communications of the STA over the channel BW based on the airtime information. For example, controller 124 (Fig. 1) may be configured to cause, trigger, and/or control the AP implemented by device 102 (Fig. 1) to schedule communications of the STA over the channel BW based on the airtime information, e.g., as described above.

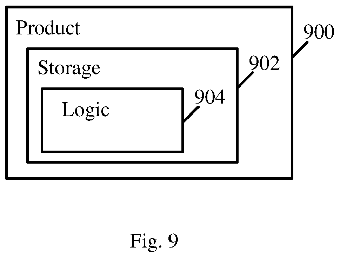

Reference is made to Fig. 9, which schematically illustrates a product of manufacture 900, in accordance with some demonstrative aspects. Product 900 may include one or more tangible computer-readable ("machine-readable") non-transitory storage media 902, which may include computer-executable instructions, e.g., implemented by logic 904, operable to, when executed by at least one computer processor, enable the at least one computer processor to implement one or more operations at device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to cause device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities, and/or to perform, trigger and/or implement one or more operations and/or functionalities described with reference to the Figs. 1, 2, 3, 4, 5, 6, 7, and/or 8, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 900 and/or machine-readable storage media 902 may include one or more types of computer-readable storage media capable of storing data, including volatile memory, non-volatile memory, removable or non-removable memory, erasable or non-erasable memory, writeable or re-writeable memory, and the like. For example, machine-readable storage media 902 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 904 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 904 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a wireless communication station (STA) to set a channel bandwidth (BW) field to indicate a channel BW; set airtime information in an airtime field, the airtime information to indicate a required time duration for the STA to communicate one or more frame exchanges of a Quality of Service (QoS) flow over the channel BW; and transmit a frame to an AP, the frame comprising the channel BW field and the airtime field.

Example 2 includes the subject matter of Example 1, and optionally, wherein the apparatus is configured to cause the STA to set importance information in an importance-based field in the frame, the importance information to indicate an importance of the QoS flow.

Example 3 includes the subject matter of Example 1 or 2, and optionally, wherein the apparatus is configured to cause the STA to set priority information in a priority field in the frame, the priority information to indicate a priority level of the QoS flow.

Example 4 includes the subject matter of any one of Examples 1-3, and optionally, wherein the apparatus is configured to cause the STA to set packet delivery ratio information in a packet delivery field in the frame, the packet delivery ratio information corresponding to a ratio between dropped packets and expected packet transmissions for the QoS flow.

Example 5 includes the subject matter of any one of Examples 1-4, and optionally, wherein the apparatus is configured to cause the STA to set periodicity information in a periodicity field in the frame, the periodicity information to indicate whether the QoS flow comprises periodic traffic or aperiodic traffic.

Example 6 includes the subject matter of any one of Examples 1-5, and optionally, wherein the apparatus is configured to cause the STA to set periodicity duration information in a periodicity duration field in the frame, the periodicity duration information to indicate a periodicity duration of periodic traffic in the QoS flow.

Example 7 includes the subject matter of any one of Examples 1-6, and optionally, wherein the apparatus is configured to cause the STA to set timing information in a timing field in the frame, the timing information to indicate a future time for the one or more frame exchanges of the QoS flow.

Example 8 includes the subject matter of any one of Examples 1-7, and optionally, wherein the apparatus is configured to cause the STA to set deadline information in a deadline field in the frame, the deadline information to indicate a deadline time of a scheduled period to be scheduled by the AP for the one or more frame exchanges of the QoS flow.

Example 9 includes the subject matter of any one of Examples 1-8, and optionally, wherein the apparatus is configured to cause the STA to set direction information in a direction field in the frame, the direction information to indicate a directionality of the QoS flow.

Example 10 includes the subject matter of any one of Examples 1-9, and optionally, wherein the apparatus is configured to cause the STA to set punctured channel information in a puncturing field in the frame, the punctured channel information to indicate a configuration of a channel puncturing of the channel BW.

Example 11 includes the subject matter of any one of Examples 1-10, and optionally, wherein the apparatus is configured to cause the STA to set one or more link Identifiers (IDs) in a link ID field in the frame, the one or more link IDs to identify one or more links for the QoS flow.

Example 12 includes the subject matter of any one of Examples 1-11, and optionally, wherein the frame comprises a management frame.

Example 13 includes the subject matter of Example 12, and optionally, wherein the management frame comprises a STA airtime request Information Element (IE), the STA airtime request IE comprising the airtime field and the channel BW field.

Example 14 includes the subject matter of any one of Examples 1-11, and optionally, wherein the frame comprises a control frame.

Example 15 includes the subject matter of any one of Examples 1-14, and optionally, wherein the apparatus is configured to cause the STA to set the airtime field and the channel BW field in an Aggregated Control (A-control) field in a Medium Access Control (MAC) header of the frame.

Example 16 includes the subject matter of Example 15, and optionally, wherein the apparatus is configured to cause the STA to set a control identifier subfield of the A-control field to indicate an A-control field type for a STA airtime request, and to set the airtime field and the channel BW field in a control information subfield of the A-control field.

Example 17 includes the subject matter of any one of Examples 1-16, and optionally, wherein the apparatus is configured to cause the STA to transmit the frame in an un-solicited non Trigger Based (TB) Physical layer Protocol Data Unit (PPDU).

Example 18 includes the subject matter of any one of Examples 1-16, and optionally, wherein the apparatus is configured to cause the STA to identify a request from the AP for the airtime information based on a trigger frame from the AP, and to transmit the frame to the AP based on the request from the AP for the airtime information.

Example 19 includes the subject matter of any one of Examples 1-18, and optionally, wherein the apparatus is configured to cause the STA to transmit the frame at an unassociated state of the STA, at which the STA is unassociated with the AP.

Example 20 includes the subject matter of any one of Examples 1-19, and optionally, wherein the STA comprises a non-AP STA.

Example 21 includes the subject matter of any one of Examples 1-19, and optionally, wherein the STA comprises an AP STA.

Example 22 includes the subject matter of any one of Examples 1-21, and optionally, comprising at least one radio to transmit the frame.

Example 23 includes the subject matter of Example 22, and optionally, comprising one or more antennas connected to the radio, and a processor to execute instructions of an operating system of the STA.

Example 24 includes an apparatus comprising logic and circuitry configured to cause an Access Point (AP) to identify a channel bandwidth (BW) based on a channel BW field in a frame from a wireless communication station (STA); identify airtime information in an airtime field of the frame, the airtime information to indicate a required time duration for the STA to communicate one or more frame exchanges of a Quality of Service (QoS) flow over the channel BW; and schedule communications of the STA over the channel BW based on the airtime information.

Example 25 includes the subject matter of Example 24, and optionally, wherein the apparatus is configured to cause the AP to schedule the communications of the STA over the channel BW based on importance information in an importance-based field in the frame, the importance information to indicate an importance of the QoS flow.

Example 26 includes the subject matter of Example 24 or 25, and optionally, wherein the apparatus is configured to cause the AP to schedule the communications of the STA over the channel BW based on priority information in a priority field in the frame, the priority information to indicate a priority level of the QoS flow.

Example 27 includes the subject matter of any one of Examples 24-26, and optionally, wherein the apparatus is configured to cause the AP to schedule the communications of the STA over the channel BW based on packet delivery ratio information in a packet delivery field in the frame, the packet delivery ratio information corresponding to a ratio between dropped packets and expected packet transmissions for the QoS flow.

Example 28 includes the subject matter of any one of Examples 24-27, and optionally, wherein the apparatus is configured to cause the AP to schedule the communications of the STA over the channel BW based on periodicity information in a periodicity field in the frame, the periodicity information to indicate whether the QoS flow comprises periodic traffic or aperiodic traffic.

Example 29 includes the subject matter of any one of Examples 24-28, and optionally, wherein the apparatus is configured to cause the AP to schedule the communications of the STA over the channel BW based on periodicity duration information in a periodicity duration field in the frame, the periodicity duration information to indicate a periodicity duration of periodic traffic in the QoS flow.

Example 30 includes the subject matter of any one of Examples 24-29, and optionally, wherein the apparatus is configured to cause the AP to schedule the communications of the STA over the channel BW based on timing information in a timing field in the frame, the timing information to indicate a future time for the one or more frame exchanges of the QoS flow.

Example 31 includes the subject matter of any one of Examples 24-30, and optionally, wherein the apparatus is configured to cause the AP to schedule the communications of the STA over the channel BW based on deadline information in a deadline field in the frame, the deadline information to indicate a deadline time of a scheduled period to be scheduled by the AP for the one or more frame exchanges of the QoS flow.

Example 32 includes the subject matter of any one of Examples 24-31, and optionally, wherein the apparatus is configured to cause the AP to schedule the communications of the STA over the channel BW based on direction information in a direction field in the frame, the direction information to indicate a directionality of the QoS flow.

Example 33 includes the subject matter of any one of Examples 24-32, and optionally, wherein the apparatus is configured to cause the AP to schedule the communications of the STA over the channel BW based on punctured channel information in a puncturing field in the frame, the punctured channel information to indicate a configuration of a channel puncturing of the channel BW.

Example 34 includes the subject matter of any one of Examples 24-33, and optionally, wherein the apparatus is configured to cause the AP to schedule the communications of the STA over the channel BW based on one or more link Identifiers (IDs) in a link ID field in the frame, the one or more link IDs to identify one or more links for the QoS flow.

Example 35 includes the subject matter of any one of Examples 24-34, and optionally, wherein the frame comprises a management frame.

Example 36 includes the subject matter of Example 35, and optionally, wherein the management frame comprises a STA airtime request Information Element (IE), the STA airtime request IE comprising the airtime field and the channel BW field.

Example 37 includes the subject matter of any one of Examples 24-34, and optionally, wherein the frame comprises a control frame.

Example 38 includes the subject matter of any one of Examples 24-37, and optionally, wherein the apparatus is configured to cause the AP to identify the airtime field and the channel BW field in an Aggregated Control (A-control) field in a Medium Access Control (MAC) header of the frame.

Example 39 includes the subject matter of Example 38, and optionally, wherein the apparatus is configured to cause the AP to access the airtime field and the channel BW field in a control information subfield of the A-control field based on a determination that a control identifier subfield of the A-control field indicates an A-control field type for a STA airtime request.

Example 40 includes the subject matter of any one of Examples 24-39, and optionally, wherein the frame is in an un-solicited non Trigger Based (TB) Physical layer Protocol Data Unit (PPDU) from the STA.

Example 41 includes the subject matter of any one of Examples 24-40, and optionally, wherein the apparatus is configured to cause the AP to transmit to the STA a trigger frame configured to indicate a request for the airtime information.

Example 42 includes the subject matter of any one of Examples 24-41, and optionally, wherein the apparatus is configured to cause the AP to process the frame from the STA at an unassociated state, at which the STA is unassociated with the AP.

Example 43 includes the subject matter of any one of Examples 24-42, and optionally, wherein the STA comprises a non-AP STA.

Example 44 includes the subject matter of any one of Examples 24-42, and optionally, wherein the STA comprises an AP STA.

Example 45 includes the subject matter of any one of Examples 24-44, and optionally, comprising at least one radio to receive the frame.

Example 46 includes the subject matter of Example 45, and optionally, comprising one or more antennas connected to the radio, and a processor to execute instructions of an operating system of the AP.

Example 47 comprises a wireless communication device comprising the apparatus of any of Examples 1-46.

Example 48 comprises an apparatus comprising means for executing any of the described operations of any of Examples 1-46.

Example 49 comprises a product comprising one or more tangible computer-readable non-transitory storage media comprising instructions operable to, when executed by at least one processor, enable the at least one processor to cause a wireless communication device to perform any of the described operations of any of Examples 1-46.

Example 50 comprises an apparatus comprising: a memory interface; and processing circuitry configured to: perform any of the described operations of any of Examples 1-46.

Example 51 comprises a method comprising any of the described operations of any of Examples 1-46.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a wireless communication station (STA), the method comprising:
setting a channel bandwidth (BW) field to indicate a channel BW;
setting airtime information in an airtime field, the airtime information to indicate a required time duration for the STA to communicate one or more frame exchanges of a Quality of Service (QoS) flow over the channel BW; and
transmitting a frame to an AP, the frame comprising the channel BW field and the airtime field.

2. The method of claim 1 comprising setting importance information in an importance-based field in the frame, the importance information to indicate an importance of the QoS flow.

3. The method of claim 1 or 2 comprising setting priority information in a priority field in the frame, the priority information to indicate a priority level of the QoS flow.

4. The method of any one of claims 1-3 comprising setting packet delivery ratio information in a packet delivery field in the frame, the packet delivery ratio information corresponding to a ratio between dropped packets and expected packet transmissions for the QoS flow.

5. The method of any one of claims 1-4 comprising setting periodicity information in a periodicity field in the frame, the periodicity information to indicate whether the QoS flow comprises periodic traffic or aperiodic traffic.

6. The method of any one of claims 1-5 comprising setting timing information in a timing field in the frame, the timing information to indicate a future time for the one or more frame exchanges of the QoS flow.

7. The method of any one of claims 1-6 comprising setting deadline information in a deadline field in the frame, the deadline information to indicate a deadline time of a scheduled period to be scheduled by the AP for the one or more frame exchanges of the QoS flow.

8. The method of any one of claims 1-7 comprising setting direction information in a direction field in the frame, the direction information to indicate a directionality of the QoS flow.

9. The method of any one of claims 1-8 comprising setting one or more link Identifiers (IDs) in a link ID field in the frame, the one or more link IDs to identify one or more links for the QoS flow.

10. The method of any one of claims 1-9, wherein the frame comprises a management frame, wherein the management frame comprises a STA airtime request Information Element (IE), the STA airtime request IE comprising the airtime field and the channel BW field.

11. The method of any one of claims 1-9 comprising setting the airtime field and the channel BW field in an Aggregated Control (A-control) field in a Medium Access Control (MAC) header of the frame.

12. The method of any one of claims 1-11 comprising transmitting the frame at an unassociated state of the STA, at which the STA is unassociated with the AP.

13. An apparatus comprising a controller configured to cause a wireless communication station (STA) to perform the method of any one of claims 1-12.

14. The apparatus of claim 13 comprising at least one radio to transmit the frame, one or more antennas connected to the radio, and a processor to execute instructions of an operating system of the STA.

15. A product comprising one or more tangible computer-readable non-transitory storage media comprising instructions operable to, when executed by at least one processor, enable the at least one processor to cause a wireless communication station (STA) to perform the method of any one of claims 1-12.
